(19) Europäisches Patentamt
European Patent Office
Office européen des brevets

(11) **EP 3 167 693 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(51) Int Cl.:
*H01S 3/10* (2006.01)     *H01S 3/23* (2006.01)
*H01S 3/223* (2006.01)    *H05G 2/00* (2006.01)
*H01S 3/00* (2006.01)

(21) Anmeldenummer: **14739145.2**

(22) Anmeldetag: **11.07.2014**

(86) Internationale Anmeldenummer:
**PCT/EP2014/064958**

(87) Internationale Veröffentlichungsnummer:
**WO 2016/005006 (14.01.2016 Gazette 2016/02)**

(54) **TREIBERLASERANORDNUNG, EUV-STRAHLUNGSERZEUGUNGSVORRICHTUNG UND VERFAHREN ZUM VERSTÄRKEN VON GEPULSTER LASERSTRAHLUNG**

DRIVER LASER ARRANGEMENT, EUV RADIATION GENERATION APPARATUS AND METHOD FOR AMPLIFYING PULSED LASER RADIATION

CIRCUIT DE COMMANDE POUR LASER, DISPOSITIF DE PRODUCTION D'UN RAYONNEMENT EUV ET PROCÉDÉ D'AMPLIFICATION D'UN RAYONNEMENT LASER PULSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.05.2017 Patentblatt 2017/20**

(73) Patentinhaber: **TRUMPF Lasersystems for Semiconductor Manufacturing GmbH
71254 Ditzingen (DE)**

(72) Erfinder:
• **SCHULZ, Joachim
70839 Gerlingen (DE)**

• **KRAUSS, Günther
71254 Ditzingen (DE)**
• **WISSERT, Matthias
70176 Stuttgart (DE)**

(74) Vertreter: **Kohler Schmid Möbus Patentanwälte Partnerschaftsgesellschaft mbB
Gropiusplatz 10
70563 Stuttgart (DE)**

(56) Entgegenhaltungen:
**EP-A2- 0 674 374     US-A1- 2006 192 152**

• **None**

EP 3 167 693 B1

**Beschreibung**

Die vorliegende Erfindung betrifft eine Treiberlaseranordnung für eine EUV-Strahlungserzeugungsvorrichtung, die eine Strahlquelle zur Erzeugung von gepulster Laserstrahlung mit einer Laserfrequenz sowie eine Verstärkeranordnung mit mindestens einem optischen Verstärker zur Verstärkung der gepulsten Laserstrahlung aufweist. Die Erfindung betrifft eine EUV-Strahlungserzeugungsvorrichtung mit einer solchen Treiberlaseranordnung sowie ein Verfahren zum Verstärken von gepulster Laserstrahlung in einer Treiberlaseranordnung für eine EUV-Strahlungserzeugungsvorrichtung.

Eine Treiberlaseranordnung für eine EUV-Lichtquelle ist beispielsweise aus der US 2009/0095925 A1 bekannt geworden. Die dort beschriebene Treiberlaseranordnung weist eine Strahlquelle zur Erzeugung von gepulster Laserstrahlung und einen oder mehrere optische Verstärker zur Verstärkung der gepulsten Laserstrahlung auf. Die Strahlquelle der Treiberlaseranordnung dient zur Erzeugung von so genannten Seed-Pulsen, die in dem bzw. in den optischen Verstärkern auf hohe Laserleistungen von mehreren kW, ggf. von 10 kW oder darüber verstärkt werden. Die von der Treiberlaseranordnung verstärkte Laserstrahlung wird über eine Strahlführungseinrichtung einer Fokussiereinrichtung zugeführt, welche die Laserstrahlung bzw. den Laserstrahl in einem Zielbereich fokussiert. In dem Zielbereich wird ein Target-Material bereitgestellt, welches bei der Bestrahlung mit dem Laserstrahl in einen Plasma-Zustand übergeht und hierbei EUV-Strahlung emittiert.

Bei der weiter oben beschriebenen Treiberlaseranordnung wird typischer Weise von der Strahlquelle ein Vor-Puls und zeitlich kurz aufeinander folgend ein Haupt-Puls erzeugt und auf den Zielbereich mit dem Target-Material fokussiert. Der Vor-Puls soll dazu dienen, das Target-Material zu beeinflussen, beispielsweise dieses aufzuheizen, zu expandieren, zu vaporisieren, zu ionisieren und/oder um ein schwaches oder ggf. ein starkes Plasma zu erzeugen. Der Haupt-Puls soll dazu dienen, den Hauptteil des von dem Vor-Puls beeinflussten Materials in den Plasmazustand überzuführen und hierbei EUV-Strahlung zu erzeugen. Der Vor-Puls weist typischer Weise eine deutlich geringere Laserleistung als der Haupt-Puls auf. Bei der Treiberlaseranordnung der US 2009/0095925 A1 wird für den Vor-Puls und den Haupt-Puls dieselbe Laserwellenlänge verwendet. Es ist aber auch möglich, für den Vor-Puls und den Haupt-Puls unterschiedliche Wellenlängen zu verwenden, wie dies in der WO 2011/162903 A1 beschrieben ist, in der ein Seed-Laser zur Erzeugung des Vor-Pulses und ein weiterer Seed-Laser mit anderer Wellenlänge zur Erzeugung des Haupt-Pulses verwendet wird, die mittels eines Strahlkombinierers kombiniert werden, um entlang eines gemeinsamen Strahlwegs einen oder mehrere Verstärker sowie die auf die Treiberlaseranordnung folgende Strahlführungseinrichtung zu durchlaufen.

Bei der oben beschriebenen Treiberlaseranordnung kann eine Reflexion der verstärkten Laserstrahlung beispielsweise an dem Target-Material erfolgen, das z.B. in Form von Zinn-Tröpfchen vorliegen kann. Der an einem solchen Tröpfchen erzeugte Rückreflex läuft in den bzw. in die optischen Verstärker zurück und durchläuft das dort vorhandene Verstärkungsmedium, so dass auch der Rückreflex in dem bzw. in den optischen Verstärkern verstärkt wird. Auch ein schwacher Rückreflex ist ggf. ausreichend, um nach der Verstärkung in dem Verstärkungsmedium des optischen Verstärkers eine Leistung zu erzeugen, die optische oder ggf. mechanische Komponenten in dem optischen Verstärker oder im Strahlengang vor dem optischen Verstärker beschädigen kann.

Zur Unterdrückung von rückreflektierter Laserstrahlung ist es bekannt, so genannte optische Isolatoren einzusetzen, die nur in einer Richtung Laserstrahlung durchlassen und die aufgrund dieser Eigenschaft auch als optische Dioden bezeichnet werden. Derartige optische Isolatoren können beispielsweise zwischen einer Strahlquelle und einem optischen Verstärker oder auch zwischen zwei optischen Verstärkern angeordnet werden. Beispielsweise ist es aus der DE 41 27 407 A1 bekannt, jeweils eine optische Diode zwischen einem Injection-Seeding-Laser und einem Resonator sowie zwischen einem Resonator und einem Verstärker anzubringen.

Bei der oben beschriebenen Treiberlaseranordnung können bei der Verstärkung hohe Laserleistungen von 500 W und darüber, von 1 kW und darüber und sogar von 10 kW und mehr erzeugt werden. Bei derart hohen Laserleistungen besteht das Problem, dass die bei herkömmlichen optischen Isolatoren verwendeten optischen Bauteile ggf. starke thermisch bedingte Aberrationen, insbesondere Astigmatismus, hervorrufen und zudem ggf. durch die Laserstrahlung beschädigt werden können. Zudem besteht das Problem, dass optische Isolatoren in der Regel Laserstrahlung, die in die unerwünschte Richtung propagiert, nicht zu 100% unterdrücken können, so dass bei hohen Laserleistungen trotz der Verwendung von optischen Isolatoren der nicht unterdrückte Leistungsanteil so groß ist, dass ggf. trotz der Verwendung eines optischen Isolators zurücklaufende Laserstrahlung erzeugt wird. Erschwerend kommt bei der vorliegenden Anwendung hinzu, dass optische Dioden, welche auf dem Prinzip des Polarisators bzw. Phasenschiebers basieren, bauartbedingt nur Laserstrahlung mit einem bestimmten Phasensprung bzw. mit einer bestimmten Phasenverschiebung (bspw. 180°) unterdrücken können. Der Wert für diesen Phasensprung bzw. für diese Phasenverschiebung wird ggf. bei der Reflexion an einem Tröpfchen nicht eingehalten, so dass die an dem Tröpfchen reflektierte Laserstrahlung auch aus diesem Grund von der optischen Diode nicht vollständig unterdrückt werden kann.

Eine Treiberlaseranordnung für eine EUV-Strahlungserzeugungsvorrichtung die eine Anregung mit zwei Pulsen unterschiedlicher Intensität aufweist ist z.B. aus US 2006/192152 A1 bekannt. Eine Entkopplung von Rückreflexen von einem Target in eine MOPA Anordnung mittels einer Frequenzverschiebungseinrichtung ist z.B. aus EP0674374 A2 bekannt.

Aufgabe der Erfindung

Der Erfindung liegt die Aufgabe zugrunde, eine Treiberlaseranordnung für eine EUV-Strahlungserzeugungsvorrichtung, eine EUV-Strahlungserzeugungsvorrichtung sowie ein Verfahren zum Verstärken von Laserstrahlung bereitzustellen, bei denen zurücklaufende Laserstrahlung wirksam unterdrückt wird.

Gegenstand der Erfindung

Die Aufgabe der Erfindung wird gelöst durch eine Vorrichtung und ein Verfahren wie in den unabhängigen Ansprüchen definiert. Vorteilhafte Ausführungsbeispiele sind in den abhängigen Ansprüchen definiert.
Diese Aufgabe wird gelöst durch eine Treiberlaseranordnung der eingangs genannten Art, welche mindestens eine Frequenzverschiebungseinrichtung zur Erzeugung einer Frequenzverschiebung der Laserfrequenz der Laserstrahlung relativ zu einer Maximums-Frequenz einer frequenzabhängigen Verstärkung des mindestens einen optischen Verstärkers sowie eine Steuereinrichtung aufweist, die ausgebildet bzw. programmiert ist, die Frequenzverschiebung derart einzustellen, dass die frequenzabhängige Verstärkung des optischen Verstärkers für die Laserstrahlung, genauer gesagt für die Leistung der Laserstrahlung, auf weniger als 90 %, bevorzugt auf weniger als 70 %, besonders bevorzugt auf weniger als 50 % einer maximalen Verstärkung des optischen Verstärkers reduziert ist. Sind in der Treiberlaseranordnung mehrere optische Verstärker in Reihe geschaltet, wird die Verstärkung an mindestens einem der optischen Verstärker auf weniger als 90 %, weniger als 70 % oder weniger als 50 % der maximalen Verstärkung des optischen Verstärkers reduziert.
Unter dem Begriff "Verstärkung" eines optischen Verstärkers wird im Sinne dieser Anmeldung die so genannte Kleinsignalverstärkung, genauer gesagt der Verstärkungskoeffizient der Kleinsignalverstärkung, verstanden. Bei der Kleinsignalverstärkung werden keine Sättigungseffekte berücksichtigt. Optische Verstärker weisen eine frequenzabhängige Kleinsignalverstärkung bzw. ein frequenzabhängiges Verstärkungsprofil auf, das beispielsweise bei einem $CO_2$-Gaslaser bzw. Verstärker im Wesentlichen einem Lorentz-Profil entsprechen kann. Das Verstärkungsprofil weist bei einer Maximums-Frequenz $f_M$ ein Maximum $V_{MAX}$ der (Kleinsignal-)Verstärkung auf. Für die (nicht normierte) maximale Verstärkung $V_{MAX}$, d.h. für den Verstärkungskoeffizienten der Kleinsignalverstärkung, gilt gemäß der Lasertheorie folgendes:

$$V_{MAX} = c^2 / (8\,\pi\,f_M^2\,\Delta B)\,(N_2 - N_1)\,1/\tau_{sp}\,,$$

wobei $\Delta B$ die Halbwertsbreite bzw. die Verstärkerbandbreite des frequenzabhängigen Verstärkerprofils, $N_2$ bzw. $N_1$ die Besetzungsdichte des oberen bzw. unteren Energieniveaus und $T_{sp}$ die mittlere Lebensdauer im oberen Energieniveau bezeichnen. Die (Kleinsignal-)Verstärkung $V_{MAX}$ hat die Einheit 1/Länge, z.B. $cm^{-1}$. Die Intensität $I(x)$ der in den Verstärker mit der Frequenz $f_M$ und der Intensität $I_0$ eintretenden Laserstrahlung entlang der Verstärkerstrecke $x$ ergibt sich gemäß der Formel $I(x) = I_0\,exp(V_{MAX}\,x)$, wenn die Sättigung nicht berücksichtigt wird.
Optische Verstärker sollen grundsätzlich die eintretende Laserstrahlung mit der maximal möglichen Verstärkung verstärken. Daher stimmt die Laserfrequenz der in den optischen Verstärker eingestrahlten Laserstrahlung in der Regel mit der Maximums-Frequenz $f_M$ des optischen Verstärkers überein. Bei der hier beschriebenen Verwendung eines oder mehrerer optischer Verstärker in einer Treiberlaseranordnung hat es sich als günstig erwiesen, wenn die Verstärkung für die Laserstrahlung gegenüber der maximal möglichen Verstärkung zumindest für einen ersten Puls, den so genannten Vor-Puls, reduziert ist. Der Vor-Puls und der auf diesen folgende Haupt-Puls werden in kurzer zeitlicher Abfolge nacheinander auf das Target-Material eingestrahlt. Die beiden Pulse durchlaufen mindestens einen optischen Verstärker kollinear, aber leicht zeitversetzt. Der Vor-Puls soll gegenüber dem Haupt-Puls eine geringere Leistung aufweisen. Um die Laserleistung des ersten Pulses zu drosseln, wird bei bekannten Lösungen bei der Erzeugung des Vor-Pulses die Laserleistung der Strahlquelle reduziert.
An Stelle der Drosselung der Laserleistung des ersten Pulses vor dem Erreichen des mindestens einen optischen Verstärkers wird erfindungsgemäß vorgeschlagen, die Drosselung der Leistung des ersten Pulses in dem bzw. in den optischen Verstärkern zu erzeugen. Dies ist günstig, da wie weiter oben dargestellt wurde, ein Teil der Laserstrahlung des ersten Pulses an dem Target-Material in den Strahlengang zurück reflektiert wird, der den oder die optische(n) Verstärker durchläuft, ggf. auf eine zerstörerische Leistung verstärkt wird und in die Strahlquelle rückgekoppelt wird. Der Rückreflex bzw. der rückreflektierte Anteil der Laserstrahlung des ersten Pulses wird in den optischen Verstärkern mit der momentan verfügbaren Verstärkung verstärkt. Die Verstärkung der zurück laufenden Laserstrahlung ist insbesondere beim Vor-Puls problematisch, sofern die in den optischen Verstärker eingekoppelte Laserleistung der Strahlquelle reduziert wird, wie dies bei den bekannten Lösungen der Fall ist. Aufgrund der geringen Leistung der eingekoppelten Laserstrahlung ist in diesem Fall in dem Verstärkermedium noch sehr viel "Leistung" bzw. eine hohe Besetzungsinversion vorhanden, die der Rückreflex des Vor-Pulses beim Zurücklaufen durch die optischen Verstärker nutzt und eine deutliche Verstärkung erfährt.

Der Haupt-Puls durchläuft den bzw. die optischen Verstärker erst nach dem Rückreflex des Vor-Pulses. Bei der Verstärkung des Haupt-Pulses wird ein Großteil der in dem bzw. in den optischen Verstärker(n) verfügbaren Leistung genutzt, so dass der Rückreflex des Haupt-Pulses in den optischen Verstärkern nur eine vergleichsweise geringe Verstärkung erfährt.

Durch die Reduzierung der Verstärkung des ersten Pulses in dem bzw. in den optische(n) Verstärker(n) wird auch die Verstärkung des am Target-Material zurück reflektierten Teils des ersten Pulses in entsprechendem Maße reduziert, so dass die Leistung des zurück reflektierten Teils des ersten Pulses beim Zurücklaufen durch die Verstärkeranordnung geringer ist. Aufgrund der reduzierten Laserleistung des Rückreflexes können ggf. im Strahlengang zwischen den optischen Verstärkern oder im Strahlengang vor dem (ersten) optischen Verstärker eine oder mehrere optische Dioden angeordnet werden, um den zurück reflektierten Anteil der Laserstrahlung zu unterdrücken. Die Verwendung optischer Dioden zur Unterdrückung der von dem Target-Material zurück reflektierten Laserstrahlung ist ansonsten ggf. problematisch, da optische Dioden zerstörungsanfällig sind und nur für geringe Laserleistungen zur Verfügung stehen.

Die Strahlquelle ist zur Erzeugung eines ersten Pulses und eines zweiten, zeitlich auf den ersten folgenden Pulses der gepulsten Laserstrahlung ausgebildet und die Steuereinrichtung ist ausgebildet, die Verstärkung des optischen Verstärkers für den ersten Puls auf weniger als 90 %, bevorzugt auf weniger als 70 %, besonders bevorzugt auf weniger als 50 % der maximalen (Kleinsignal-)Verstärkung des optischen Verstärkers für den ersten Puls zu reduzieren. Wie weiter oben beschrieben wurde, sollte am Ende der Verstärkung der erste Puls eine geringere Energie aufweisen als der zweite Puls. Aufgrund der Problematik des Rückreflexes ist es günstig, wenn die geringere Leistung bzw. Energie des ersten Pulses durch die Reduzierung der Verstärkung des ersten Pulses in dem mindestens einen optischen Verstärker vorgenommen wird. Die Reduzierung der Verstärkung kann in einem einzigen optischen Verstärker der Verstärkeranordnung vorgenommen werden, es ist aber ggf. günstiger, wenn eine Reduzierung der Verstärkung in zwei oder mehr optischen Verstärkern der Verstärkeranordnung vorgenommen wird. Aufgrund der verminderten Verstärkung des Rückreflexes hat es sich als günstig erwiesen, die Reduzierung der Laserleistung des verstärkten ersten Pulses gegenüber der Laserleistung des verstärkten zweiten Pulses durch die Reduzierung der optischen Verstärkung der Verstärkeranordnung für den ersten Puls vorzunehmen. Die Steuereinrichtung bzw. die Treiberlaseranordnung ist ausgebildet, den zweiten Puls mit der maximalen Verstärkung zu verstärken, d.h. die Laserfrequenz des zweiten Pulses stimmt typischer Weise mit der Maximums-Frequenz des optischen Verstärkers bzw. der optischen Verstärker überein.

Bei einer vorteilhaften Ausführungsform weist die Frequenzverschiebungseinrichtung mindestens einen akustooptischen Modulator auf. Ein akustooptischer Modulator, auch Bragg-Zelle genannt, ermöglicht es auf einfache Weise, die Frequenz eines Laserstrahls zu verschieben. Zu diesem Zweck wird in einem transparenten Festkörper typischer Weise mit Hilfe von Schallwellen ein Gitter erzeugt, an dem der Lichtstrahl gebeugt und aufgrund der Bewegung der das Gitter bildenden Schallwellen in seiner Frequenz verändert wird. Die Frequenzverschiebung der Laserstrahlung entspricht typischer Weise der Modulationsfrequenz bzw. der Anregungsfrequenz der Schallwellen bzw. ist zu dieser proportional.

Bei einer Weiterbildung ist der akustooptische Modulator zum Betrieb mit einer Modulationsfrequenz von mindestens 40 MHz, bevorzugt von mindestens 80 MHz, ausgebildet. Wie weiter oben beschrieben wurde, entspricht die Modulationsfrequenz typischer Weise der Frequenzverschiebung der Laserstrahlung (bei einer Beugung in die +/-1. Beugungsordnung). Aufgrund des vergleichsweise breiten Spektrums der Verstärkung des optischen Verstärkers ist es günstig, wenn die Frequenzverschiebung und damit die Modulationsfrequenz des akustooptischen Modulators möglichst groß sind. Sind in der Verstärkeranordnung mehrere optische Verstärker vorhanden, kann in den zwei oder mehr optischen Verstärkern jeweils ein akustooptischer Modulator vorhanden sein, welcher eine Frequenzverschiebung erzeugt. Die akustooptischen Modulatoren können in diesem Fall so ausgebildet bzw. angeordnet sein, dass diese eine Frequenzverschiebung in die gleiche Richtung bewirken, d.h. dass sich die Frequenzverschiebungen der einzelnen akustooptischen Modulatoren addieren. Allerdings ist eine solche Anordnung ggf. aufgrund der hohen Laserleistungen am Ausgang der Verstärkeranordnung problematisch. Es ist auch möglich, einen, zwei oder mehr optische Modulatoren im Strahlweg vor dem ersten optischen Verstärker anzuordnen. Sofern die Strahlquelle eine erste Laserquelle zur Erzeugung des Vor-Pulses und eine zweite Laserquelle zur Erzeugung des Haupt-Pulses aufweist, deren Strahlwege von dem bzw. den optischen Verstärker(n) zusammengeführt werden, kann der mindestens eine akustooptische Modulator insbesondere im Strahlweg der ersten Laserquelle angeordnet sein.

Bei einer weiteren Weiterbildung ist der akustooptische Modulator zur Beugung der Laserstrahlung in mindestens die zweite Beugungsordnung ausgebildet, d.h. die einfallende Laserstrahlung wird in die (+2. oder -2.) zweite Beugungsordnung gebeugt. Auf diese Weise kann bei gegebener Modulationsfrequenz die Frequenzverschiebung erhöht werden.

Bei einer weiteren Ausführungsform weist die Strahlquelle eine Frequenzverschiebungseinrichtung auf. In diesem Fall handelt es um eine Strahlquelle, deren Laserwellenlänge bzw. Laserfrequenz durchstimmbar oder umschaltbar ist. Die Steuereinrichtung steuert die Frequenzverschiebungseinrichtung an, um eine Frequenzverschiebung zwischen der Laserfrequenz und der Maximums-Frequenz des ersten Pulses zu bewirken, um auf diese Weise die Leistung des ersten Pulses zu reduzieren. Nach dem Erzeugen des ersten Pulses verändert die Steuereinrichtung mit Hilfe der Frequenzverschiebungseinrichtung die Laserfrequenz, so dass die Strahlquelle einen zweiten Puls mit einer Laserfrequenz erzeugt, die typischer Weise mit der Maximums-Frequenz des optischen Verstärkers übereinstimmt.

Als Frequenzverschiebungseinrichtung zur Durchstimmung der Laserwellenlänge der Strahlquelle kann beispielsweise ein optisch parametrischer Oszillator dienen, in dem eine Frequenzkonversion von Laserstrahlung erfolgt, die beispielsweise von einem Festkörperlaser erzeugt wird. Alternativ ist es auch möglich, in der Strahlquelle die Laserstrahlung mit zwei unterschiedlichen Laserfrequenzen bzw. Laserwellenlängen zu erzeugen. Beispielsweise kann eine $CO_2$-Laserquelle zur Erzeugung des Haupt-Pulses bei einer Laserwellenlänge von 10,6 $\mu$m dienen und ggf. kann zur Erzeugung des Vor-Pulses eine anderen Linie im Absorptionsspektrum des $CO_2$-Lasergases verwendet werden, beispielsweise eine Linie, die eine Wellenlänge im Bereich zwischen 10,1 $\mu$m und 10,35 $\mu$m liegt. Auch können ggf. in der Strahlquelle zwei Laserquellen vorgesehen sein, die Laserstrahlung bei unterschiedlichen Laserwellenlängen erzeugen, beispielsweise eine erste $CO_2$-Laserquelle mit einer Wellenlänge von 10,6 $\mu$m und eine zweite $CO_2$-Laserquelle mit einer Wellenlänge im angegebenen Bereich zwischen 10,1 $\mu$m und 10,35 $\mu$m. In diesem Fall kann die Frequenzverschiebungseinrichtung eine Umschalteinrichtung sein, welche zur Erzeugung des Vor-Pulses oder des Haupt-Pulses die Anregung von unterschiedlichen Laserlinien im Absorptionsspektrum bewirkt bzw. zur Erzeugung des Vor-Pulses und des Haupt-Pulses zwischen zwei unterschiedlichen Laserquellen (mit fester Laserfrequenz) umschaltet, von denen eine, deren Laserfrequenz nicht mit der Maximums-Frequenz übereinstimmt, als Frequenzverschiebungseinrichtung dient. Insbesondere können bei der Verwendung von zwei Laserquellen die Frequenzverschiebungseinrichtungen beispielsweise in Form der akustooptischen Modulatoren im Strahlengang derjenigen Laserquelle angeordnet sein, welche den Vor-Puls erzeugt, so dass die Laserfrequenz der Laserstrahlung, welche von der den Haupt-Puls erzeugenden Laserquelle emittiert wird, keine Frequenzverschiebung erfährt.

Bei einer weiteren Ausführungsform weist der optische Verstärker eine (Kleinsignal-Verstärkung mit einer Verstärkerbandbreite von 400 MHz oder darüber für die Laserstrahlung auf. Unter der Kleinsignalverstärkerbandbreite wird diejenige Bandbreite verstanden, in der die maximale (Leistungs-)Verstärkung des optischen Verstärkers auf 50 % abgefallen ist ("full width half maximum"). Dient der optische Verstärker zur Verstärkung von Laserstrahlung einer Laserquelle, die als $CO_2$-Laser

ausgebildet ist, kann dieser beispielsweise $CO_2$ als Lasergas umfassen. Die Verstärkerbandbreite des optischen Verstärkers ist abhängig von der Temperatur, vom Druck und von der Zusammensetzung des Lasergases. Für die vorliegende Anwendung kann davon ausgegangen werden, dass diese Parameter bekannt sind. Die Bandbreite der Laserstrahlung, die von einer Strahlquelle wie beispielsweise einem $CO_2$-Laser emittiert wird, weist eine deutlich kleinere Band- bzw. Linienbreite auf, die durch den Laserresonator vorgegeben ist, so dass durch eine Frequenzverschiebung einer Reduzierung der Verstärkung erzeugt werden kann.

Die Erfindung betrifft eine EUV-Strahlungserzeugungsvorrichtung, umfassend: eine Treiberlaseranordnung wie oben beschrieben, eine Vakuum-Kammer, in der ein Target-Material an einer Zielposition anordenbar ist, sowie eine Strahlführungseinrichtung zur Führung der gepulsten Laserstrahlung von der Treiberlasereinrichtung in Richtung auf die Zielposition. Wie weiter oben beschrieben wurde, wird ein Vor-Puls mit geringerer Laserleistung und zeitlich kurz danach ein Haupt-Puls mit größerer Laserleistung zum Target-Material beispielsweise in Form von Zinn-Tröpfchen geführt, um dieses in einen Plasma-Zustand überzuführen.

Die Erfindung betrifft auch ein Verfahren zum Verstärken von gepulster Laserstrahlung in einer Treiberlaseranordnung für eine EUV-Strahlungserzeugungsvorrichtung, umfassend: Verstärken der gepulsten Laserstrahlung in mindestens einem optischen Verstärker, wobei beim Verstärken der Laserstrahlung eine Frequenzverschiebung einer Laserfrequenz der Laserstrahlung gegenüber einer Maximums-Frequenz einer frequenzabhängigen Verstärkung des optischen Verstärkers erzeugt wird, so dass die Kleinsignal-Verstärkung des optischen Verstärkers für die Laserstrahlung auf weniger als 90 %, bevorzugt auf weniger als 70 %, besonders bevorzugt auf weniger als 50 % einer maximalen Verstärkung des optischen Verstärkers reduziert wird. Bei dem Verfahren wird die Laserfrequenz gegenüber der Maximums-Frequenz des optischen Verstärkers so weit verschoben, dass die der verschobenen Frequenz zugeordnete Verstärkung des optischen Verstärkers auf weniger als 90% bzw. auf weniger als 70 % oder ggf. auf weniger als 50 % der maximalen Verstärkung des optischen Verstärkers abfällt.

Die gepulste Laserstrahlung umfasst einen ersten Puls und einen zweiten, zeitlich auf den ersten folgenden Puls, wobei die Verstärkung des ersten Pulses durch den optischen Verstärker bei weniger als 90 %, bevorzugt bei weniger als 70 %, besonders bevorzugt bei weniger als 50 % der maximalen Verstärkung des optischen Verstärkers liegt. Wie weiter oben dargestellt wurde, ist es aufgrund des Rückreflexes günstig, die reduzierte Leistung des Vor-Pulses durch eine Reduzierung der Verstärkung des Vor-Pulses in der Verstärkeranordnung zu erzeugen. Der zweite Puls wird hingegen mit der maximalen Verstärkung des bzw. der optischen Verstärker verstärkt, d.h. die Laserfrequenz des zweiten

9      **EP 3 167 693 B1**      10

Pulses stimmt typischer Weise mit der Maximums-Frequenz des bzw. der optischen Verstärker überein.

Die Erfindung betrifft auch ein Computerprogrammprodukt, welches Codemittel aufweist, die zur Durchführung aller Schritte des oben beschriebenen Verfahrens angepasst sind, wenn das Computerprogramm auf einer Datenverarbeitungsanlage abläuft. Bei der Datenverarbeitungsanlage kann es sich beispielsweise um die weiter oben beschriebene Steuereinrichtung handeln, welche in geeigneter Weise auf die Frequenzverschiebungseinrichtung einwirkt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a-c      schematische Darstellungen von drei Ausführungsbeispielen einer EUV-Strahlungserzeugungsvorrichtung mit einer Treiberlaseranordnung, welche eine Verstärkeranordnung mit drei optischen Verstärkern sowie eine Frequenzverschiebungseinrichtung umfasst,

Fig. 2      eine schematische Darstellung eines akustooptischen Modulators, der in die Treiberlaseranordnung von Fig. 1a integriert ist, um die Frequenz der gepulsten Laserstrahlung zu verändern, und

Fig. 3      eine Darstellung der frequenzabhängigen Kleinsignal-Verstärkung eines der optischen Verstärker von Fig. 1a-c.

In der folgenden Beschreibung der Zeichnungen werden für gleiche bzw. funktionsgleiche Bauteile identische Bezugzeichen verwendet.

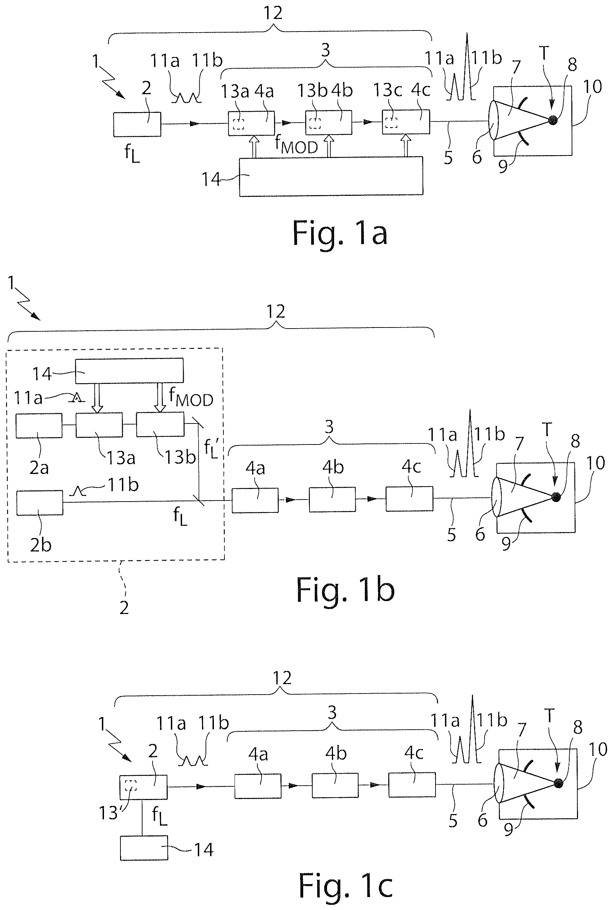

**Fig. 1a** zeigt stark schematisch eine EUV-Strahlungserzeugungsvorrichtung 1, welche eine Strahlquelle 2, eine Verstärkeranordnung 3 mit drei optischen Verstärkern 4a, 4b, 4c bzw. Verstärkerstufen, eine nicht näher dargestellte

Strahlführungseinrichtung 5 sowie eine Fokussierlinse 6 aufweist. Die Fokussierlinse 6 dient dazu, von der Strahlquelle 2 erzeugte und von der Verstärkeranordnung 3 verstärkte Laserstrahlung 7 (in Form eines gepulsten Laserstrahls) an einem Zielbereich bzw. einer Zielposition T zu fokussieren, an dem ein Target-Material 8 eingebracht ist. Das Target-Material 8 geht bei der Bestrahlung mit dem Laserstrahl 7 in einen Plasma-Zustand über und emittiert hierbei EUV-Strahlung, die mittels eines Kollektorspiegels 9 fokussiert wird.

Bei dem in Fig. 1 gezeigten Beispiel weist der Kollektorspiegel 9 eine Öffnung zum Durchtritt des Laserstrahls 7 auf und die Fokussierlinse 6 trennt eine Vakuum-Kammer 10, in welcher das Target-Material 8 angeordnet ist, von der Strahlführungseinrichtung 5. Die Strahlquelle 2 weist im gezeigten Beispiel einen $CO_2$-Laser auf, um in kurzer zeitlicher Folge einen ersten Puls 11a (Vor-Puls) und einen zweiten Puls 11b (Haupt-Puls) zu erzeugen, die gemeinsam in der Verstärkeranordnung 3 verstärkt und auf das Target-Material 8 bzw. in den Bereich der Zielposition T fokussiert werden. Die Strahlquelle 2 bildet gemeinsam mit der Verstärkeranordnung 3 eine Treiberlaseranordnung 12 der EUV-Strahlungserzeugungsvorrichtung 1.

Die Wellenlänge $\lambda_L$ der Laserstrahlung 7, die von der Strahlquelle 2 erzeugt wird, ist konstant und liegt im gezeigten Beispiel einer Strahlquelle 2 in Form eines $CO_2$-Lasers bei ca. 10,6 $\mu$m. Zwischen der Wellenlänge $\lambda_L$ der Laserstrahlung 7 und der Frequenz $f_L$ der Laserstrahlung 7 gilt die bekannte Beziehung: $f = c / \lambda$, wobei f die Frequenz, $\lambda$ die Wellenlänge und c die Lichtgeschwindigkeit im Vakuum bezeichnet. Die Laserwellenlänge $\lambda_L$ von 10,6 $\mu$m entspricht einer Laserfrequenz $f_L$ von ca. 21 THz. Wie in Fig. 1a anhand der Pulshöhen zu erkennen ist, werden die beiden Pulse 11a, 11b von der Strahlquelle 2 mit gleicher Leistung erzeugt und in den drei optischen Verstärkern 4a-c der Verstärkeranordnung 3 unterschiedlich stark verstärkt, so dass der verstärkte erste Puls 11a am Ausgang der Verstärkeranordnung 3 eine geringere Laserleistung aufweist als der verstärkte zweite Puls 11b. Die Verstärkung der Verstärkeranordnung 3 für den ersten Puls 11a kann beispielsweise bei weniger als 90 %, bevorzugt bei weniger als 70 % der Verstärkung der Verstärkeranordnung 3 für den zweiten Puls 11b liegen. Dies ist vorteilhaft, da der erste Puls 11a mit einer geringeren Leistung auf das Target-Material 8 treffen soll als der zweite Puls 11b.

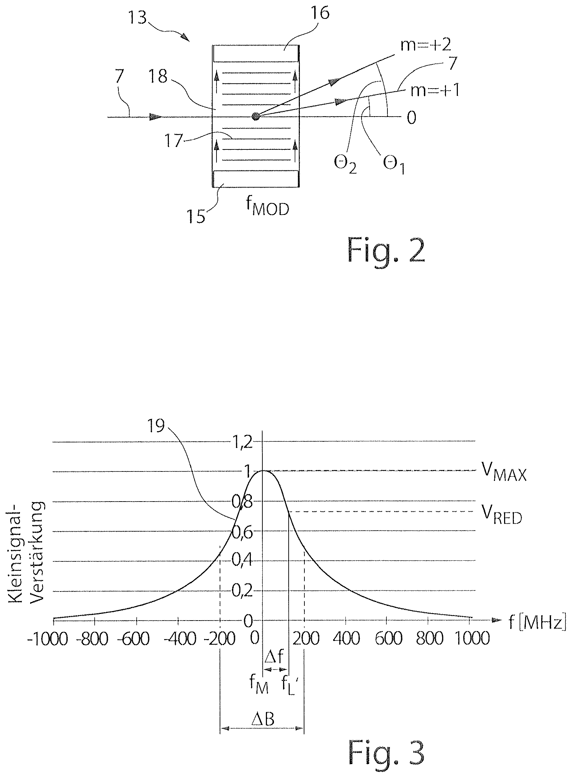

Die unterschiedliche Verstärkung der beiden Pulse 11a, 11b in der Verstärkeranordnung 3 wird dadurch erreicht, dass die Verstärkung des ersten Pulses 11a eines jeweiligen optischen Verstärkers 4a-c gegenüber der Verstärkung des zweiten Pulses 11b eines jeweiligen optischen Verstärkers 4a-c reduziert wird. Um dies zu erreichen, ist bei dem gezeigten Beispiel in jedem der drei optischen Verstärker 4a-c eine Frequenzverschiebungseinrichtung in Form eines akustooptischen Modulators 13a-c angeordnet, dessen Funktionsweise nachfolgend anhand von **Fig. 2** und von **Fig. 3** beschrieben wird.

Fig. 2 zeigt einen akustooptischen Modulator 13, der einen Ultraschallsender 15, einen Ultraschall-Absorber 16 und einen zwischen den beiden angeordneten für die Laserwellenlänge $\lambda_L$ transparenten Festkörperkristall 18 beispielsweise aus Ge aufweist. Der Ultraschallsender 15 erzeugt eine Schallwelle, die in dem Festkörperkristall 18 eine periodische Änderung der Dichte und damit eine periodische Modulation des Brechungsindex bewirkt, d.h. die Schallwelle wirkt wie ein Gitter 17. Konstruktive Interferenz tritt an dem Gitter 17 unter den Bragg-Winkeln $\theta_m$ auf, für die gilt:

$$\sin(\theta_m) = m\,\lambda_L\,/\,2\,\Lambda;$$

wobei $\Lambda$ die Gitterperiode des durch die Ultraschallwelle gebildeten Gitters 17 bzw. die Wellenlänge der Ultraschallwelle und $m = ...,-2, -1, 0, +1, +2, ...$ die Beugungsordnung bezeichnet, wobei in Fig. 3 beispielhaft die $m = +1$. und die $m = +2$. Beugungsordnung gezeigt sind. Die Modulationsfrequenz $f_{MOD}$ der Ultraschallwelle steht mit der Gitterperiode $\Lambda$ über die Formel $\Lambda = c_F/f_{MOD}$ in Beziehung, wobei $c_F$ die Schallgeschwindigkeit in dem Festkörperkristall 18 bezeichnet. Der Laserstrahl 7 erfährt bei der Beugung in die 1. Beugungsordnung eine Doppler-Frequenzverschiebung $\Delta f$, welche der Anregungsfrequenz $f_{MOD}$ des akustooptischen Modulators 13 entspricht. Der akustooptische Modulator 13 ist in dem gezeigten Beispiel ausgelegt, mit einer Modulationsfrequenz $f_{MOD}$ von mindestens 40 MHz, bevorzugt von mindestens 80 MHz betrieben zu werden.

Die Frequenzverschiebung $\Delta f$ der Laserstrahlung 7 in dem akustooptischen Modulator 13 kann genutzt werden, um die Verstärkung des ersten Pulses 11a der Laserstrahlung 7 in einem jeweiligen optischen Verstärker 4a-c zu reduzieren. Fig. 3 zeigt die frequenzabhängige Kleinsignal-Verstärkung 19 bzw. das Verstärkungsprofil eines jeweiligen optischen Verstärkers 4a-c, welches auf Eins normiert ist, d.h. die maximale Verstärkung $V_{MAX}$ des optischen Verstärkers 4a-c beträgt $V_{MAX} = 1,0$. Bei der frequenzabhängigen Verstärkung 19 des optischen Verstärkers 4a-c, der beispielsweise ein Lasergas ($CO_2$) als Verstärkermedium aufweisen kann, handelt es sich um ein Lorentz-Profil, welches die maximale Verstärkung $V_{MAX}$ bei einer Maximums-Frequenz $f_M$ annimmt, die auf die Laserfrequenz $f_L$ der zu verstärkenden Laserstrahlung 7 abgestimmt ist, d.h. es gilt $f_M = f_L$. Die Maximums-Frequenz $f_M$ ist in Fig. 3 auf Null normiert, stimmt aber mit der Laserfrequenz $f_L$ der von der Strahlquelle 2 erzeugten Laserstrahlung 7 überein, d.h. es gilt $f_M = 21$ THz.

Durch den akustooptischen Modulator 13 bzw. 13a-c wird eine Frequenzverschiebung $\Delta f$ von ca. 130 MHz der Laserfrequenz $f_L$ erzeugt, so dass die Laserstrahlung 7 in den optischen Verstärker 4a-c mit einer verschobenen Laserfrequenz $f_L'$ eintritt und die Kleinsignal-Verstärkung in dem optischen Verstärker 4a-c für Laserstrahlung 7 mit der verschobenen Laserfrequenz $f_L'$ erfolgt. Die Laserstrahlung 7 mit der verschobenen Laserfrequenz $f_L'$ wird von dem optischen Verstärker 4a-c mit einer geringeren Verstärkung $V_{RED}$ verstärkt, die im gezeigten Beispiel bei ca. 75 % der maximalen Verstärkung $V_{MAX}$ des optischen Verstärkers 4a-c liegt. Es versteht sich, dass die Verstärkung $V_{MAX}$ auch auf weniger als ca. 70 % oder ggf. auf weniger als ca. 50 % reduziert werden kann, wenn die Frequenzverschiebung $\Delta f$ groß genug gewählt wird. Die Frequenzverschiebung

$\Delta f$, die notwendig ist, um die gewünschte Reduzierung der Verstärkung 19 zu erreichen, hängt von der Verstärkerbandbreite $\Delta B$ des optischen Verstärkers 4a-c ab, die im gezeigten Beispiel bei ca. $\Delta B = 400$ MHz liegt. Bei einer geringeren Verstärkerbandbreite $\Delta B$ ist eine kleinere Frequenzverschiebung $\Delta f$ erforderlich, um die gewünschte reduzierte Verstärkung $V_{RED}$ zu erzeugen.

Bei dem in Fig. 1a gezeigten Beispiel sind die akustooptischen Modulatoren 13a-c in die optischen Verstärker 4a-c integriert dargestellt. Es versteht sich aber, dass die akustooptischen Modulatoren 13a-c auch vor einem jeweiligen optischen Verstärker 4a-c angeordnet sein können. Um die Verstärkung des ersten Pulses 11a in der Verstärkeranordnung 3 in den drei optischen Verstärkern 4a-c zu reduzieren, weist die Treiberlaseranordnung 12 von Fig. 1a eine Steuereinrichtung 14 auf, welche die drei (baugleichen) akustooptischen Modulatoren 13a-c von Fig. 1a mit der gleichen Modulationsfrequenz von 120 MHz ansteuert, wenn die Strahlquelle 2 den ersten Puls 11a erzeugt. Die Frequenzverschiebung $\Delta f$ der drei akustooptischen Modulatoren 13a-c weist dasselbe Vorzeichen auf, d.h. die verschobene Laserfrequenz $f_L'$ der Laserstrahlung 7, die in dem dritten akustooptischen Modulator 13c verstärkt wird, liegt bei $f_L + 3 \times \Delta f$, d.h. bei ca. $f_L + 360$ MHz. Entsprechend weist der dritte optische Verstärker 4c eine reduzierte Verstärkung $V_{RED}$ für die Laserstrahlung 7 auf, die bei weniger als ca. 35 % der maximalen Verstärkung $V_{MAX}$ der Laserstrahlung 7 liegt.

Erzeugt die Strahlquelle 2 den zweiten Puls 11b, steuert die Steuereinrichtung 14 die akustooptischen Modulatoren 13a-c derart an, dass diese keine Schallwelle erzeugen, so dass die Gitterwirkung entfällt und die Laserstrahlung 7 die akustooptischen Modulatoren 13a-c ohne eine Frequenzverschiebung durchläuft. Auf diese Weise wird der zweite Puls 11b in jedem der drei optischen Verstärker 4a-c mit der maximal möglichen Verstärkung $V_{MAX}$ verstärkt. Da die Propagation der Laserstrahlung 7 des zweiten Pulses 11b entlang der 0. Beugungsordnung erfolgt, die von der Propagationsrichtung der Laserstrahlung 7 mit der 1. Beugungsordnung abweicht, ist es typischer Weise erforderlich, die beiden Strahlwege der 0. Beugungsordnung und der 1. Beugungsordnung zusammenzuführen, bevor diese in einem jeweiligen optischen Verstärker 4a-c verstärkt werden.

Es versteht sich, dass anders als in Fig. 1a gezeigt ist, zwei, drei oder mehr akustooptische Modulatoren im Strahlweg vor dem ersten optischen Verstärker 4a angeordnet sein können, um bereits vor dem ersten optischen Verstärker 4a eine Frequenzverschiebung von $k \times \Delta f$ zu erzeugen ($k = 2, 3, ...$). Auch kann alternativ ein einziger akustooptischer Modulator 13 verwendet werden, um die erforderliche Frequenzverschiebung $\Delta f$ zu erzeugen, sofern dieser mit einer genügend großen Modulationsfrequenz $f_{MOD}$ betrieben werden kann. Die Modulationsfrequenz $f_{MOD}$ eines akustooptischen Modulators 13 kann jedoch nicht beliebig gesteigert werden, so dass es ggf. günstiger ist, mehrere akustooptische Modulatoren 4a-c in Reihe zu schalten, um die gewünschte Frequenzverschiebung Δf zu erzeugen.

Eine Möglichkeit zur Erhöhung, beispielsweise zur Verdopplung der Frequenzverschiebung Δf eines akustooptischen Modulators 13a-c bei vorgegebener Modulationsfrequenz $f_{MOD}$ besteht darin, dem bzw. den optische(n) Verstärker(n) 4a-c nicht die erste sondern die zweite oder eine höhere Beugungsordnung des akustooptischen Modulators 13 zur Verstärkung zuzuführen, da bei höheren Beugungsordnungen bei gegebener Modulationsfrequenz $f_{MOD}$ der Betrag der Frequenzverschiebung Δf zunimmt.

Im gezeigten Beispiel liegt die Laserleistung des zweiten Pulses 11b der Laserstrahlung 7 am Ausgang der Verstärkeranordnung 3, d.h. nach der dritten Verstärkerstufe 4c, bei einem Faktor Fünf und die Verstärkung der Verstärkeranordnung 3 liegt für den zweiten Puls 11b bei mehr als einem Faktor Fünfzig. Die Verstärkung des ersten Pulses 11a beträgt daher ca. 10 % der Verstärkung des zweiten Pulses 11b durch die Verstärkeranordnung 3. Die Leistung des zweiten Pulses 11b am Ausgang der Verstärkeranordnung 3 beträgt typischer Weise mehr als ca. 10 Kilowatt.

Fig. 1b zeigt ein Ausführungsbeispiel der Treiberlaseranordnung 12, bei welcher die Strahlquelle 2 eine erste Laserquelle 2a und eine zweite Laserquelle 2b aufweist. Die beiden Laserquellen 2a, 2b können zur Erzeugung von Laserstrahlung 7 bei ein- und derselben oder ggf. bei geringfügig unterschiedlichen Wellenlängen bzw.

Laserfrequenzen ausgebildet sein. Beispielsweise kann die erste Laserquelle 2a zur Erzeugung von $CO_2$-Laserstrahlung 7 bei einer Wellenlänge von 10,6 μm dienen und die zweite Laserquelle 2b kann zur Erzeugung von $CO_2$-Laserstrahlung 7 bei einer zweiten Wellenlänge, beispielsweise zwischen 10,1 μm und 10,35 μm, dienen (oder umgekehrt). Die Strahlwege der beiden Laserquellen 2a, 2b werden vor der Verstärkeranordnung 3 zusammengeführt bzw. überlagert. Zu diesem Zweck kann eine (passive) Überlagerungseinrichtung, z.B. ein teildurchlässiger Spiegel, verwendet werden, wie dies in Fig. 1b dargestellt ist.

In dem gezeigten Beispiel dient die erste Laserquelle 2a zur Erzeugung des Vor-Pulses und die zweite Laserquelle 2b dient zur Erzeugung des Haupt-Pulses. Bei der in Fig. 1b gezeigten Treiberlaseranordnung 12 stimmt die Laserfrequenz $f_L$ der zweiten Laserquelle 2b mit der Maximums-Frequenz $f_M$ der optischen Verstärker 4a-c überein und wird daher mit der maximalen Verstärkung $V_{MAX}$ verstärkt. Die Laserfrequenz der ersten Laserquelle 2a wird hingegen mit Hilfe der beiden im Strahlweg der ersten Laserquelle 2a angeordneten akustooptischen Modulatoren 13a, 13b in eine verschobene Laserfrequenz $f_L$' transformiert, indem die Steuereinrichtung 14 die beiden akustooptischen Modulatoren 13a, 13b mit einer geeigneten vorgegebenen Modulationsfrequenz $f_{MOD}$ ansteuert.

Bei dem in Fig. 1b gezeigten Beispiel erzeugt bei gleicher Leistung/Energie des verstärkten Pulses 11a die erste Laserquelle 2a den ersten Puls 11a mit einer höheren Leistung, als dies ohne die Frequenzverschiebung Δf durch die beiden akustooptischen Modulatoren 13a,b der Fall wäre. Die (geringere) Leistung, mit welcher der erste Puls 11a der ersten Laserquelle 2a ohne die Frequenzverschiebung Δf erzeugt würde, ist in Fig. 1b innerhalb des ersten Pulses 11a angedeutet.

Ein weiteres Ausführungsbeispiel einer Treiberlaseranordnung 12 bzw. einer EUV-Strahlungserzeugungsvorrichtung 1 ist in **Fig. 1c** dargestellt. Bei dem in Fig. 1c gezeigten Beispiel ist die Strahlquelle 2 selbst durchstimmbar, d.h. diese weist eine Frequenzverschiebungseinrichtung 13' auf, welche mittels der Steuereinrichtung 14 angesteuert werden kann, um die Laserfrequenz $f_L$ einzustellen und - wie weiter oben beschrieben wurde - gegenüber der Maximums-Frequenz $f_M$ der optischen Verstärker 4a-c zu verschieben, um die Verstärkung des ersten Pulses 11a zu drosseln.

Als Frequenzverschiebungseinrichtung 13' zur Durchstimmung der Laserwellenlänge $f_L$ der Strahlquelle 2 kann beispielsweise ein optisch parametrischer Oszillator dienen, in dem eine Frequenzkonversion der Laserstrahlung 7 erfolgt. Die Laserstrahlung 7 selbst kann beispielsweise von einem Festkörperlaser erzeugt werden. Alternativ ist es auch möglich, in der Strahlquelle 2 die Laserstrahlung 7 mit zwei unterschiedlichen Laserfrequenzen bzw. Laserwellenlängen zu erzeugen. Beispielsweise kann eine $CO_2$-Laserquelle zur Erzeugung des Haupt-Pulses bei einer Laserwellenlänge von 10,6 μm dienen. Zur Erzeugung des Vor-Pulses kann die Anregung einer anderen Linie im Absorptionsspektrum des $CO_2$-Lasergases erfolgen, beispielsweise eine Linie, die eine Wellenlänge im Bereich zwischen 10,1 μm und 10,35 μm aufweist. Auch können ggf. - wie weiter oben beschrieben - in der Strahlquelle 2 zwei Laserquellen vorgesehen sein, die Laserstrahlung 7 bei unterschiedlichen Laserwellenlängen erzeugen, beispielsweise eine erste $CO_2$-Laserquelle, die Laserstrahlung 7 bei einer Wellenlänge von 10,6 μm erzeugt und eine zweite $CO_2$-Laserquelle, die Laserstrahlung 7 mit einer Wellenlänge im oben angegebenen Bereich zwischen 10,1 μm und 10,35 μm erzeugt (oder umgekehrt). In diesem Fall kann die Frequenzverschiebungseinrichtung 13' eine Umschalteinrichtung sein, welche zur Erzeugung des Vor-Pulses oder des Haupt-Pulses die Anregung von unterschiedlichen Laserlinien im Absorptionsspektrum bewirkt bzw. zur Erzeugung des Vor-Pulses und des Haupt-Pulses zwischen zwei unterschiedlichen Laserquellen umschaltet. Gegebenenfalls kann auch die Laserstrahlung der beiden Laserquellen in der Strahlquelle 2 mittels einer (passiven) Überlagerungseinrichtung überlagert werden. In diesem Fall kann die erste Laserquelle, deren Laserfrequenz nicht mit der Maximums-Frequenz der optischen Verstärker 4a-c übereinstimmt, als Frequenzverschiebungseinrichtung dienen. Die Strahlquelle 2 wird von der Steuereinrichtung 14 lediglich zu dem Zweck angesteuert, um die Pulse 11a, 11b in der gewünschten zeitlichen Abfolge zu erzeugen.

Zusammenfassend kann auf die oben beschriebene Weise vorteilhaft eine Reduzierung der Laserleistung des Vor-Pulses 11a gegenüber der Laserleistung des Haupt-Pulses 11b vorgenommen werden. Hierbei kann insbesondere die Verstärkung eines an dem Target-Material 8 reflektierten Anteils der Laserstrahlung 7 des Vor-Pulses 11a bei der Propagation zurück durch die Verstärkeranordnung 3 wirksam reduziert werden.

**Patentansprüche**

1. EUV-Strahlungserzeugungsvorrichtung (1), umfassend:
   eine Treiberlaseranordnung (12), umfassend:

   eine Strahlquelle (2) zur Erzeugung von gepulster Laserstrahlung (7) mit mindestens einer Laserfrequenz ($f_L$), die zur Erzeugung eines ersten Pulses (11a) und eines zweiten, zeitlich auf den ersten folgenden Pulses (11b) der gepulsten Laserstrahlung (7) ausgebildet ist, sowie
   eine Verstärkeranordnung (3) mit mindestens einem optischen Verstärker (4a-c) zur Verstärkung der gepulsten Laserstrahlung (7), wobei der erste Puls (11a) nach der Verstärkung eine geringere Leistung aufweist als der zweite Puls (11b),
   eine Strahlführungseinrichtung (5) zur Führung der gepulsten Laserstrahlung (7) von der Treiberlaseranordnung (12) in Richtung auf eine Zielposition (T), sowie eine Vakuum-Kammer (10), in der ein Target-Material (8) an der Zielposition (T) anordenbar ist,
   **dadurch gekennzeichnet,**
   **dass** die Treiberlaseranordnung (12) mindestens eine Frequenzverschiebungseinrichtung (13a-c, 13') zur Erzeugung einer Frequenzverschiebung ($\Delta f$) der Laserfrequenz ($f_L$) der Laserstrahlung (7) relativ zu einer Maximums-Frequenz ($f_M$) einer frequenzabhängigen Verstärkung (19) des mindestens einen optischen Verstärkers (4a-c) sowie
   eine Steuereinrichtung (14) umfasst, die ausgebildet ist, die Frequenzverschiebung ($\Delta f$) derart einzustellen, dass die Verstärkung ($V_{RED}$) des optischen Verstärkers (4a-c) für die Laserstrahlung (7) auf weniger als 90 %, bevorzugt auf weniger als 70 %, besonders bevorzugt auf weniger als 50 % einer maximalen Verstärkung ($V_{MAX}$) des optischen Verstärkers (4a-c) reduziert ist,
   wobei die Steuereinrichtung (14) ausgebildet ist, die Verstärkung ($V_{RED}$) des optischen Verstärkers (4a-c) für den ersten Puls (11a) auf weniger als 90 %, bevorzugt auf weniger als 70 %, besonders bevorzugt auf weniger als 50 % der maximalen Verstärkung ($V_{MAX}$) des optischen Verstärkers (13a-c) für den ersten Puls (11a) zu reduzieren, und wobei der zweite Puls (11b) den mindestens einen optischen Verstärker (4a-c) erst nach einem Rückreflex des an dem Target-Material (8) zurück reflektierten ersten Pulses (11a) durchläuft, und wobei der zweite Puls (11b) in dem mindestens einem optischen Verstärker (4a-c) mit der maximalen Verstärkung ($V_{MAX}$) verstärkt wird.

2. EUV-Strahlungserzeugungsvorrichtung nach Anspruch 1, bei welcher die Frequenzverschiebungseinrichtung mindestens einen akustooptischen Modulator (13a-c) aufweist.

3. EUV-Strahlungserzeugungsvorrichtung nach Anspruch 2, bei welcher der akustooptische Modulator (13a-c) zum Betrieb mit einer Modulationsfrequenz ($f_{MOD}$) von mindestens 40 MHz, bevorzugt von mindestens 80 MHz, ausgebildet ist.

4. EUV-Strahlungserzeugungsvorrichtung nach Anspruch 2 oder 3, bei dem der akustooptische Modulator (13a-c) zur Beugung der Laserstrahlung (7) in mindestens die zweite Beugungsordnung (m= +2) ausgebildet ist.

5. EUV-Strahlungserzeugungsvorrichtung nach einem der vorhergehenden Ansprüche, bei welcher die Strahlquelle (2) eine Frequenzverschiebungseinrichtung (13') aufweist.

6. EUV-Strahlungserzeugungsvorrichtung nach einem der vorhergehenden Ansprüche, bei welcher der optische Verstärker (4a-c) eine Verstärkung (19) mit einer Verstärkerbandbreite ($\Delta B$) von 400 MHz oder darüber für die Laserstrahlung (7) aufweist.

7. Verfahren zum Verstärken von gepulster Laserstrahlung (7) in einer Treiberlaseranordnung (12) einer EUV-Strahlungserzeugungsvorrichtung (1), die zusätzlich zur Treiberlaseranordnung (12) eine Strahlführungseinrichtung (5) zur Führung der gepulsten Laserstrahlung (7) von der Treiberlaseranordnung (12) in Richtung auf eine Zielposition (T) und eine Vakuum-Kammer (10) aufweist, in der ein Target-Material (8) an der Zielposition (T) anordenbar ist, das Verfahren umfassend:

   Verstärken der gepulsten Laserstrahlung (7), die einen ersten Puls (11a) und einen zweiten, zeitlich auf den ersten folgenden Puls (11b) umfasst, in mindestens einem optischen Verstärker (4a-c), wobei der erste Puls (11a) nach dem Verstärken eine geringere Leistung aufweist als der zweite Puls (11b),
   **dadurch gekennzeichnet,**

**dass** beim Verstärken der Laserstrahlung (7) eine Frequenzverschiebung (Δf) einer Laserfrequenz (f_L) der Laserstrahlung (7) gegenüber einer Maximums-Frequenz (f_M) einer frequenzabhängigen Verstärkung (19) des optischen Verstärkers (4a-c) erzeugt wird, so dass die Verstärkung (V_RED) des optischen Verstärkers (4a-c) für die Laserstrahlung (7) auf weniger als 90 %, bevorzugt auf weniger als 70 %, besonders bevorzugt auf weniger als 50 % einer maximalen Verstärkung (V_MAX) des optischen Verstärkers (4a-c) reduziert wird, und dass die Verstärkung des ersten Pulses (11a) durch den optischen Verstärker (4a-c) bei weniger als 90 %, bevorzugt bei weniger als 70 %, besonders bevorzugt bei weniger als 50 % der maximalen Verstärkung (V_MAX) des optischen Verstärkers (4a-c) liegt, wobei der zweite Puls (11b) den mindestens einen optischen Verstärker (4a-c) erst nach einem Rückreflex des an dem Target-Material (8) zurück reflektierten ersten Pulses (11a) durchläuft, und wobei der zweite Puls (11b) in dem mindestens einem optischen Verstärker (4a-c) mit der maximalen Verstärkung (V_MAX) verstärkt wird.

8. Computerprogrammprodukt, welches Codemittel aufweist, die zur Durchführung aller Schritte des Verfahrens nach Anspruch 7 angepasst sind, wenn das Computerprogramm auf einer Datenverarbeitungsanlage abläuft.

**Claims**

1. An EUV radiation production apparatus (1), comprising:
   a driver laser arrangement (12), comprising:

   a beam source (2) for producing pulsed laser radiation (7) with at least one laser frequency (f_L), being embodied to produce a first pulse (11a) and, following the first pulse in time, a second pulse (11b) of the pulsed laser radiation (7), and
   an amplifier arrangement (3) with at least one optical amplifier (4a-c) for amplifying the pulsed laser radiation (7), wherein the first pulse (11a) has a lower power than the second pulse (11b) after the amplification,
   a beam guiding device (5) for guiding the pulsed laser radiation (7) from the driver laser arrangement (12) toward a target position (T), and a vacuum chamber (10) in which a target material (8) is arrangeable at the target position (T),
   **characterized in that**
   the driver laser arrangement (12) comprises at least one frequency shifting device (13a-c, 13') for producing a frequency shift (Δf) of the laser frequency (f_L) of the laser radiation (7) relative to a maximum frequency (f_M) of a frequency-dependent gain (19) of the at least one optical amplifier (4a-c), and
   a control device (14) embodied to set the frequency shift (Δf) in such a way that the gain (V_RED) of the optical amplifier (4a-c) for the laser radiation (7) is reduced to less than 90%, preferably to less than 70%, particularly preferably to less than 50%, of a maximum gain (V_MAX) of the optical amplifier (4a-c), wherein the control device (14) is embodied to reduce the gain (V_RED) of the optical amplifier (4a-c) for the first pulse (11a) to less than 90%, preferably to less than 70%, particularly preferably to less than 50%, of the maximum gain (V_MAX) of the optical amplifier (13a-c) for the first pulse (11a), and wherein the second pulse (11b) passes through the at least one optical amplifier (4a-c) only after a back-reflection of the first pulse (11a) which is reflected back at the target material (8), and wherein the second pulse (11b) is amplified with the maximum gain (V_MAX) in the at least one optical amplifier (4a-c).

2. The EUV radiation production apparatus as claimed in claim 1, wherein the frequency shifting device has at least one acousto-optic modulator (13a-c).

3. The EUV radiation production apparatus as claimed in claim 2, wherein the acousto-optic modulator (13a-c) is embodied for operation with a modulation frequency (f_MOD) of at least 40 MHz, preferably of at least 80 MHz.

4. The EUV radiation production apparatus as claimed in claim 2 or 3, wherein the acousto-optic modulator (13a-c) is embodied to diffract the laser radiation (7) into at least the second order of diffraction (m = +2).

5. The EUV radiation production apparatus as claimed in one of the preceding claims, wherein the beam source (2) has a frequency shifting device (13').

6. The EUV radiation production apparatus as claimed in one of the preceding claims, wherein the optical amplifier (4a-c) has a gain (19) with an amplifier bandwidth (ΔB) of 400 MHz or more for the laser radiation (7).

7. A method for amplifying pulsed laser radiation (7) in a driver laser arrangement (12) of an EUV radiation production apparatus (1), which, in addition to the driver laser arrangement (12) comprises a beam guiding device (5) for guiding the pulsed laser radiation (7) from the driver laser arrangement (12) toward a target position (T), and a vacuum chamber (10) in which a target material (8) is arrangeable at the target position (T),
the method comprising:

amplifying the pulsed laser radiation (7) which comprises a first pulse (11a) and, following the first pulse in time, a second pulse (11b) in at least one optical amplifier (4a-c), wherein the first pulse (11a) has a lower power than the second pulse (11b) after the amplification,
**characterized in that**
a frequency shift ($\Delta f$) of a laser frequency ($f_L$) of the laser radiation (7) is produced in relation to a maximum frequency ($f_M$) of a frequency-dependent gain (19) of the optical amplifier (4a-c) when amplifying the laser radiation (7) such that the gain ($V_{RED}$) of the optical amplifier (4a-c) for the laser radiation (7) is reduced to less than 90%, preferably to less than 70%, particularly preferably to less than 50%, of a maximum gain ($V_{MAX}$) of the optical amplifier (4a-c), and that the gain of the first pulse (11a) by the optical amplifier (4a-c) lies at less than 90%, preferably at less than 70%, particularly preferably at less than 50%, of the maximum gain ($V_{MAX}$) of the optical amplifier (4a-c),
wherein the second pulse (11b) passes through the at least one optical amplifier (4a-c) only after a back-reflection of the first pulse (11a) that is reflected back at the target material (8), and wherein the second pulse (11b) is amplified with the maximum gain ($V_{MAX}$) in the at least one optical amplifier (4a-c).

8. A computer program product comprising code means adapted to execute all steps of the method as claimed in claim 7 when the computer program runs on a data processing system.

**Revendications**

1. Dispositif de génération de rayonnement EUV (1), comprenant :
un agencement de laser excitateur (12), comprenant :

une source de rayonnement (2) pour générer un rayonnement laser pulsé (7) présentant au moins une fréquence laser ($f_L$) qui est conçue pour générer une première impulsion (11a) et une deuxième impulsion (11b), qui suit dans le temps la première impulsion, du rayonnement laser pulsé (7), ainsi qu'un agencement amplificateur (3) présentant au moins un amplificateur optique (4a-c) pour amplifier le rayonnement laser pulsé (7), la première impulsion (11a) présentant une puissance plus faible que la deuxième impulsion (11b) après amplification,
un moyen de guidage de faisceau (5) pour guider le rayonnement laser pulsé (7) de l'agencement de laser excitateur (12) vers une position cible (T), ainsi qu'une chambre à vide (10) dans laquelle un matériau cible (8) peut être disposé à la position cible (T),
**caractérisé en ce**
**que** l'agencement de laser excitateur (12) comprend au moins un moyen de décalage de fréquence (13a-c, 13') pour générer un décalage de fréquence ($\Delta f$) de la fréquence laser ($f_L$) du rayonnement laser (7) par rapport à une fréquence maximale ($f_M$) d'une amplification en fonction de la fréquence (19) dudit au moins un amplificateur optique (4a-c), ainsi
**qu'**un moyen de commande (14) qui est conçu pour régler le décalage de fréquence ($\Delta f$) de telle sorte que l'amplification ($V_{RED}$) de l'amplificateur optique (4a-c) pour le rayonnement laser (7) soit réduite à moins de 90 %, de préférence à moins de 70 %, de manière particulièrement préférée à moins de 50 % d'une amplification maximale ($V_{MAX}$) de l'amplificateur optique (4a-c), le moyen de commande (14) étant conçu pour réduire l'amplification ($V_{RED}$) de l'amplificateur optique (4a-c) pour la première impulsion (11a) à moins de 90 %, de préférence à moins de 70 %, de manière particulièrement préférée à moins de 50 % d'une amplification maximale ($V_{MAX}$) de l'amplificateur optique (13a-c) pour la première impulsion (11a), et la deuxième impulsion (11b) traversant ledit au moins un amplificateur optique (4a-c) seulement après une rétroréflexion de la première impulsion (11a) réfléchie sur le matériau cible (8), et la deuxième impulsion (11b) étant amplifiée dans ledit au moins un amplificateur optique (4a-c) avec l'amplification maximale ($V_{MAX}$).

2. Dispositif de génération de rayonnement EUV selon la revendication 1, dans lequel le moyen de décalage de fréquence présente au moins un modulateur acousto-optique (13a-c).

3. Dispositif de génération de rayonnement EUV selon la revendication 2, dans lequel le modulateur acousto-optique (13a-c) est conçu pour fonctionner avec une fréquence de modulation ($f_{MOD}$) d'au moins 40 MHz, de préférence d'au moins 80 MHz.

4. Dispositif de génération de rayonnement EUV selon la revendication 2 ou 3, dans lequel le modulateur acousto-optique (13a-c) est conçu pour diffracter le rayonnement laser (7) dans au moins le deuxième ordre de diffraction (m = +2).

5. Dispositif de génération de rayonnement EUV selon l'une des revendications précédentes, dans lequel la source de rayonnement (2) présente un moyen de décalage de fréquence (13').

6. Dispositif de génération de rayonnement EUV selon l'une des revendications précédentes, dans lequel l'amplificateur optique (4a-c) présente une amplification (19) avec une largeur de bande d'amplificateur (ΔB) de 400 MHz ou plus pour le rayonnement laser (7).

7. Procédé pour amplifier un rayonnement laser pulsé (7) dans un agencement de laser excitateur (12) d'un dispositif de génération de rayonnement EUV (1) qui, en plus de l'agencement de laser excitateur (12), présente un moyen de guidage de faisceau (5) pour guider le rayonnement laser pulsé (7) de l'agencement de laser excitateur (12) vers une position cible (T) et une chambre à vide (10) dans laquelle un matériau cible (8) peut être disposé à la position cible (T), le procédé comprenant les étapes consistant à :

amplifier le rayonnement laser pulsé (7), qui comprend une première impulsion (11a) et une deuxième impulsion (11b) qui suit dans le temps la première impulsion, dans au moins un amplificateur optique (4a-c), la première impulsion (11a) présentant une puissance plus faible que la deuxième impulsion (11b) après amplification,

**caractérisé en ce**

**que**, lors de l'amplification du rayonnement laser (7), un décalage de fréquence ($\Delta f$) d'une fréquence laser ($f_L$) du rayonnement laser (7) par rapport à une fréquence maximale ($f_M$) d'une amplification en fonction de la fréquence (19) de l'amplificateur optique (4a-c) est généré de telle sorte que l'amplification ($V_{RED}$) de l'amplificateur optique (4a-c) pour le rayonnement laser (7) soit réduite à moins de 90 %, de préférence à moins de 70 %, de manière particulièrement préférée à moins de 50 % d'une amplification maximale ($V_{MAX}$) de l'amplificateur optique (4a-c), et que l'amplification de la première impulsion (11a) par l'amplificateur optique (4a-c) soit inférieure à 90 %, de préférence inférieure à 70 %, de manière particulièrement préférée inférieure à 50 % d'une amplification maximale ($V_{MAX}$) de l'amplificateur optique (4a-c), la deuxième impulsion (11b) traversant ledit au moins un amplificateur optique (4a-c) seulement après une rétroréflexion de la première impulsion (11a) réfléchie sur le matériau cible (8), et la deuxième impulsion (11b) étant amplifiée dans ledit au moins un amplificateur optique (4a-c) avec l'amplification maximale (VMAX).

8. Produit programme d'ordinateur, lequel présente des moyens de code qui sont adaptés à mettre en œuvre toutes les étapes du procédé selon la revendication 7 lorsque le programme d'ordinateur est exécuté sur un système de traitement de données.

Fig. 1a

Fig. 1b

Fig. 1c

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090095925 A1
- WO 2011162903 A1
- DE 4127407 A1
- US 20060192152 A1
- EP 0674374 A2